# EUROPEAN PATENT APPLICATION

(11) **EP 2 922 177 A1**
(43) Date of publication of application: **23.09.2015**
(21) Application number: 14160724.2
(22) Date of filing: 19.03.2014
(51) Int. Cl.: H02K 1/14, H02K 7/18

(54) **Stator segment with asymmetrical half tooth shape for large generators**

(71) Applicant: Siemens Aktiengesellschaft, 80333 München (DE)
(72) Inventor: Thomas, Arwyn, Cheshire, SK8 6HW (GB); Xia, Zhen Ping, Sheffield, S10 5TR (GB)

(57) **Abstract**

The present invention relates to a stator (100) for an electrical machine, in particular a generator for a wind turbine. The stator (100) comprises a first stator segment (110) comprising a first basic body (111) and at least one first stator tooth (112) extending from the first basic body (111). The first stator segment (110) comprises a first edge tooth (113) extending from the first basic body (111), wherein the first edge tooth (113) forms a circumferential edge section of the first stator segment (110). The stator (100) further comprises a second stator segment (120) comprising a second basic body (121) and at least one second stator tooth (122) extending from the second basic body (121), wherein the second stator segment (120) comprises a second edge tooth (123) extending from the second basic body (121). The second edge tooth (123) forms a circumferential edge section of the second stator segment (120), wherein the first stator segment (110) is attached to the second stator segment (120) such that the first edge tooth (113) is coupled to the second edge tooth (123) for forming a common edge tooth. A first top width (w1) at a first top section (114) of the first edge tooth (113) differs from a second top width (w2) at a second top section (124) of the second edge tooth (123).

## Description

### Field of invention

The present invention relates to a stator for an electrical machine, in particular a generator for a wind turbine. Furthermore, the present invention relates to a method for producing a stator for an electrical machine, in particular a generator for a wind turbine.

### Art background

For large electrical machines, such as generators for wind turbines, a stator (together with winding coils) of the electrical machine usually needs to be segmented to ease the manufacturing and transportation. The conventional stator segment comprises multiple-phase windings and stator teeth for a large electrical machine/generator.

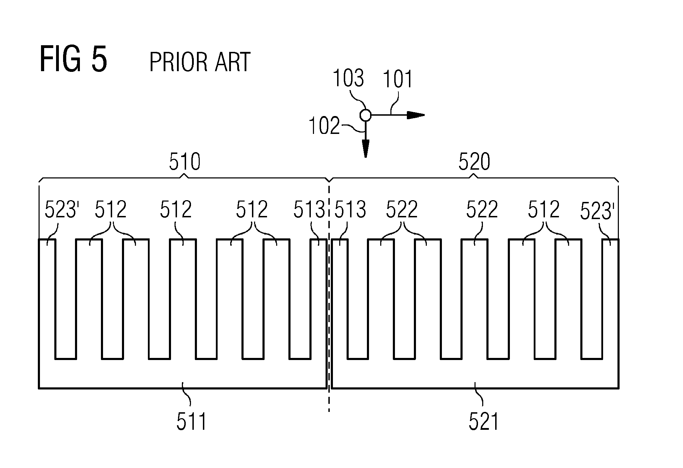

Fig. 5 shows a conventional stator comprising a conventional first stator segment 510 and a conventional second stator segment 520. The conventional stator shown in Fig. 5 is shown in an unrolled view within a plane of protection. The first stator segment 510 and the second stator segment 520 are arranged one after another along a circumferential direction 101. The conventional first stator segment 510 comprises a conventional first basic body 111, wherein a plurality of conventional first stator teeth 512 extent along a radial direction 102 from the conventional first basic body 511. Accordingly, the conventional second stator segment 520 comprises a conventional second basic body 521, wherein the plurality of conventional second stator teeth 522 extent from the conventional second basic body 521 along the radial direction 102. At an interface section between the conventional first stator segment 510 and the conventional second stator segment 520, each conventional stator segment 510, 520 comprises at its edge a respective conventional first edge tooth 513 and a conventional second edge tooth 523. Each of the conventional first edge tooth 513 and the conventional second edge tooth 523 comprise half of the width of a respective one of the conventional first stator teeth 512 and conventional second stator teeth 522. Hence, if the conventional first edge tooth 513 is attached to the conventional second edge tooth 523, both conventional edge teeth 513, 523 form together a common edge tooth which comprises the same width as the adjacent conventional first stator teeth 512 and conventional second stator teeth 522.

As shown in Fig. 5, at circumferential adjacent conventional first and second section 510, 520 respective edge teeth 513, 523 are formed, wherein each first and second edge teeth 513, 523 forms a half tooth of exactly same geometry (i.e. the same width at any radii, for example at bottom of teeth 513, 523 and top of the teeth 513, 523.

However, with this arrangement, the force on one of the edge tooth 513 is larger than the other one of the edge tooth 523 at a specific load condition of the electrical machine due to the fact that the armature field (caused by the current in winding) in one side of the edge tooth 513 is additive to the permanent magnetic (PM) exciting field, whilst in the other edge tooth 523 the effect is reduced, for example.

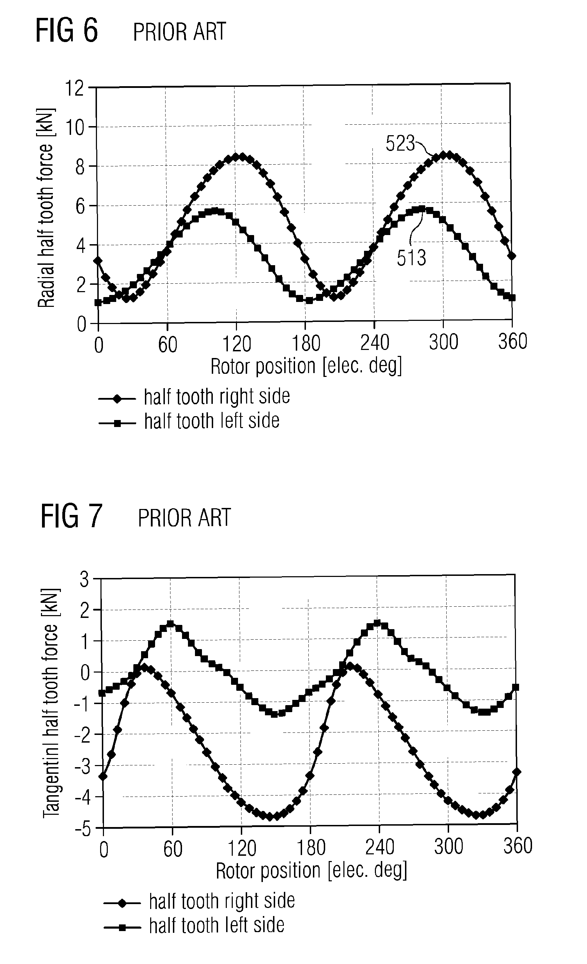

There may be 50% higher force for one edge tooth 513 than the other edge tooth 523, as shown in Fig. 6 and Fig. 7. Consequently the one edge tooth 513, 523 with larger force may potentially break down at the bottom of the respective edge tooth 513, 523 (i.e. close to the conventional basic body 511 (i.e. stator yoke side)). Additionally, there could be a local mechanical vibration due to the different forces on each edge tooth 513, 523, especially when the forces change due to varying load conditions.

Fig. 6 shows a diagram, wherein the rotor position of the electrical machine is described along the x-axis and the radial half tooth force acting on the above described conventional first edge tooth 513 and the conventional second edge to 523 is shown along the y-axis. Dependent on the rotor position, the radial half tooth force acting on the first conventional first edge tooth 513 differs to the radial half tooth force acting on the second conventional edge tooth 523.

Fig. 7 shows a diagram, wherein the rotor position of the electrical machine is described along the x-axis and the tangential half tooth force acting on the above described conventional first edge tooth 513 and the conventional second edge to 523 is shown along the y-axis. Dependent on the rotor position, the tangential half tooth force acting on the first conventional first edge tooth 513 differs to the tangential half tooth force acting on the second conventional edge tooth 523.

### Summary of the Invention

It may be an object of the present invention to provide a more robust stator for an electrical machine.

This objective is solved by a stator for an electrical machine, in particular a generator for a wind turbine, and a method for producing a stator for an electrical machine, particular for a wind turbine, according to the independent claims.

According to a first aspect of the present invention, a stator for an electrical machine, in particular a generator for a wind turbine, is presented. The stator comprises a first stator segment comprising a first basic body and at least one first stator tooth extending from the first basic body. The first stator segment comprises a first edge tooth extending from the first basic body, wherein the first edge tooth forms a circumferential edge section of the first stator segment. The stator further comprises a second stator segment comprising a second basic body and at least one second stator tooth extending from the second basic body, wherein the second stator segment comprises a second edge tooth extending from the second basic body. The second edge tooth forms a circumferential edge section of the second stator segment, wherein the first stator segment is attached to the second stator segment such that the first edge tooth is coupled to the second edge tooth for forming a common edge tooth. A first top width at a first top section of the first edge tooth differs from a second top width at a second top section of the second edge tooth.

According to a further aspect of the present invention an electrical machine, in particular a generator for a wind turbine, is presented. The electrical machine comprises a stator as described above and a rotor which is rotatably coupled to the stator.

According to a further aspect of the present invention a method for producing a stator for an electrical machine, in particular a generator for a wind turbine, is presented. According to the method, a first stator segment comprising a first basic body and at least one first stator tooth extending from the first basic body is provided, wherein the first stator segment comprises a first edge tooth extending from the basic body. The first edge tooth forms a circumferential edge section of the first stator segment. A second stator segment is provided comprising a second basic body and at least one second stator tooth extending from the second basic body, wherein the second stator segment comprises a second edge tooth extending from the second basic body. The second edge tooth forms a circumferential edge section of the second stator segment. The first stator segment is attached to the second stator segment such that the first edge tooth is coupled to the second edge tooth for forming a common edge tooth, wherein a first top width at a first top section of the first edge tooth differs from a second top width at a second top section of the second edge tooth.

The electrical machine, such as an electro motor or a generator, in particular for a wind turbine, comprises the above described stator and rotor. The stator generally comprises a plurality of windings such that the magnetic interaction with the rotor is provided. The rotor is mounted to a rotating shaft and rotates with respect the stator.

The first edge tooth and the second edge tooth are formed such that the resulting common tooth has the same dimensions (e.g. width) as the respective first and second stator teeth.

The stator is made of a plurality of stator segments which are divided along a circumferential direction. In this context, the circumferential direction denotes the direction around the centre axis and the rotating shaft of the rotor, respectively. An axial direction describes a direction parallel to the rotating shaft of the rotor. A radial direction describes a direction which is perpendicular to the axial direction and which runs through the rotating shaft and the centre axis, respectively. The circumferential direction is perpendicular to the axial direction and the radial direction.

Each of the stator segment comprises a respective basic body which extends along the circumferential direction. The respective basic body forms a so-called stator yoke. A plurality of stator teeth extends specifically from each basic body along the radial direction. The stator teeth are arranged generally one after another along the circumferential direction. A respective slot is formed between each adjacent pair of stator teeth. The stator windings are arranged inside the slot.

At a circumferential end face of the respective stator segments, a respective edge tooth is formed. The respective edge tooth comprises a smaller width than the respective first and second stator teeth of the respective first and second stator segments. The edge teeth are formed such that, in an assembled state of the first and second stator segments, the first edge tooth is coupled to and in contact with the second edge tooth such that the first edge tooth and the second edge tooth form together a common edge tooth. The common edge tooth comprises preferably the same geometric extension than the first and second stator teeth of the respective first and second stator segments.

However, the first edge tooth and the second edge tooth comprise, according to the approach of the present invention, sections with different widths. A "width" according to the present invention is denoted as the size and hence the width of a section of a respective edge tooth along the circumferential direction. The length of a respective edge tooth describes the radial extension along the radial direction of the respective edge tools. The thickness of the respective edge tooth describes the axial extension along the axial direction of the respective.

In this context, the first edge tooth comprises a first top section. The first top section may denote in one exemplary embodiment the complete length of the first edge tooth or in another exemplary embodiment only a partial length section of the first edge tooth. However, the first top section comprises the top end (free end) of the first edge tooth. Accordingly, the second edge tooth comprises a second top section. The second top section may denote in one exemplary embodiment the complete length of the second edge tooth or in another exemplary embodiment only a partial length section of the second edge tooth. However, the second top section comprises the top end (free end) of the second edge tooth. In other words, the top section may define the section between respective basic body and respective top (free) end or only a section around the top end of a respective edge tooth.

The first top width at the first top section of the first edge tooth differs, i.e. is larger or smaller, from the second top width at the second top section of the second edge tooth.

By the approach of the present invention, the first top width at the top section of the first edge tooth varies to the second top width at a second top section of the second edge tooth. Hence, asymmetrical first and second edge teeth at the adjacent circumferential ends of the respective stator segments are provided. By varying the first and second top width the (magnetic) force acting on the respective first and second edge teeth may be adjusted, such that the magnetic force acting on the first edge tooth is similar or the same as the force acting on the second edge tooth. However, the magnetic force difference between the first edge tooth and the second edge tooth may be significantly reduced in comparison to conventional symmetrical edge teeth as shown in Fig.5 above. Hence, a more robust and a higher mechanic rigidity for the respective stator segments is achieved.

According to a further exemplary embodiment of the present invention, the first edge tooth comprises a first centre section between the basic body and the first top section. The second edge tooth comprises a second centre section between the basic body and the second top section.

The first centre section may comprise a different width with respect to the first top section. Accordingly, the second centre section may comprise a different width with respect to the second top section. For example, the respective centre section may comprise half, 1/3 or 1/4 of the overall length of the respective edge tooth. Accordingly, the respective top section of a respective edge tooth comprises half, 2/3 or 3/4 of the overall length of the respective edge tooth. According to a further exemplary embodiment of the present invention, a first centre width of the first centre section equals to a second centre width of the second centre section. Hence, the respective centre widths of the adjacent first edge tooth and the second edge tooth are symmetrical and have similar geometric extension, respectively.

According to a further exemplary embodiment of the present invention, first edge tooth comprises a step-like transition between the first centre width of the first centre section and the first top width at the first top section and/or second edge tooth comprises a step-like transition between the second centre width of the second centre section and the second top width at the second top section.

According to a further exemplary embodiment of the present invention, the first top section of the first edge tooth comprises a tapered profile tapering in the direction to a top end of the first top section, wherein the second top section of the second edge tooth comprises a tapered profile tapering in the direction from a top end of the second top section to the second centre section and the second basic body, respectively.

The tapered profile of the first top section corresponds to the tapered profile of the second top section, such that the first top section and the second top section forms together a preferably rectangular profile and hence the common edge tooth.

According to a further exemplary embodiment of the present invention, the first top section of the first edge tooth comprises a groove, wherein the second top section of the second edge tooth comprises a protrusion. The protrusion and the groove are formed in such a way that the protrusion is engaged within the groove if the first stator segment is attached to the second stator segment.

Hence, the intersecting line between the first edge tooth and the second edge tooth in the respective top sections is not a straight line but is a step-like (e.g. zig-zag-pattern) line, wherein the protrusion is engaged in the groove. Hence, a more homogeneous magnetic field and a kind of form fit and dovetail connection is formed.

According to a further exemplary embodiment of the present invention, the stator comprises a third stator segment comprising a third basic body and at least one third stator tooth extending from the third basic body, wherein the third stator segment comprises a third edge tooth extending from the third basic body. The third edge tooth forms a circumferential edge section of the third stator segment. The first stator segment comprises a further first edge tooth extending from the basic body, wherein the further first edge tooth forms a further circumferential edge section of the first stator segment. The first stator segment is attached to the third stator segment such that the further first edge tooth is coupled to the third edge tooth for forming a third common edge tooth, wherein a third top width at a third top section of the third edge tooth differs from a further first top width at a further first top section of the further first edge tooth.

By the above described exemplary embodiment it is outlined, that circumferential end faces of the first stator segment, the second stator segment on the one side and the third stator segment on the other side may be attached. Along the circumferential direction, a plurality of stator segments as defined above maybe arranged one after another until the stator has a closed profile and a closed ring shaped profile, respectively. Between two adjacent stator segments the respective edge teeth of the respective adjacent stator segments are formed and are coupled with each other. Summarizing, an asymmetrical half tooth shape of the respective edge teeth at both circumferential end faces (sides) of the stator segment is formed, so that respectively the radial and tangential forces acting on these two half edge teeth are the same. Hence the risk of a potential damage is reduced. The stator may be a stator for use in both internal and external rotor topology in a large machine/generator. Furthermore, the stator according to the present invention increases its mechanical rigidity and thus reduces noise/vibration. The stator is suitable for integer slot electrical machines/generators with segmented stators. The stator is also suitable for fractional slot machine with alternative winding topology.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic view of a stator with two stator segments according to the an exemplary embodiment of the present invention, wherein 2 adjacent edge teeth comprise a tapered shape,
Fig. 2 shows a schematic view of the stator with two stator segments according to an exemplary embodiment of the present invention, wherein two adjacent edge teeth comprise respective centres sections and tapering top sections,
Fig. 3 shows a schematic view of the stator with two stator segments according to an exemplary embodiment of the present invention, wherein two adjacent edge teeth comprise step-like profiles,
Fig. 4 shows a schematic view of the stator with two stator segments according to an exemplary embodiment of the present invention, wherein two adjacent edge teeth comprise respective grooves and protrusions,
Fig. 5 shows a schematic view of a conventional stator with two invention stator segments, and
Fig. 6 and Fig. 7 shows diagrams of a radial half tooth force and a tangential half tooth force of conventional stator teeth.

### Detailed Description

The illustrations in the drawings are schematic. It is noted that in different figures similar or identical elements are provided with the same reference signs.

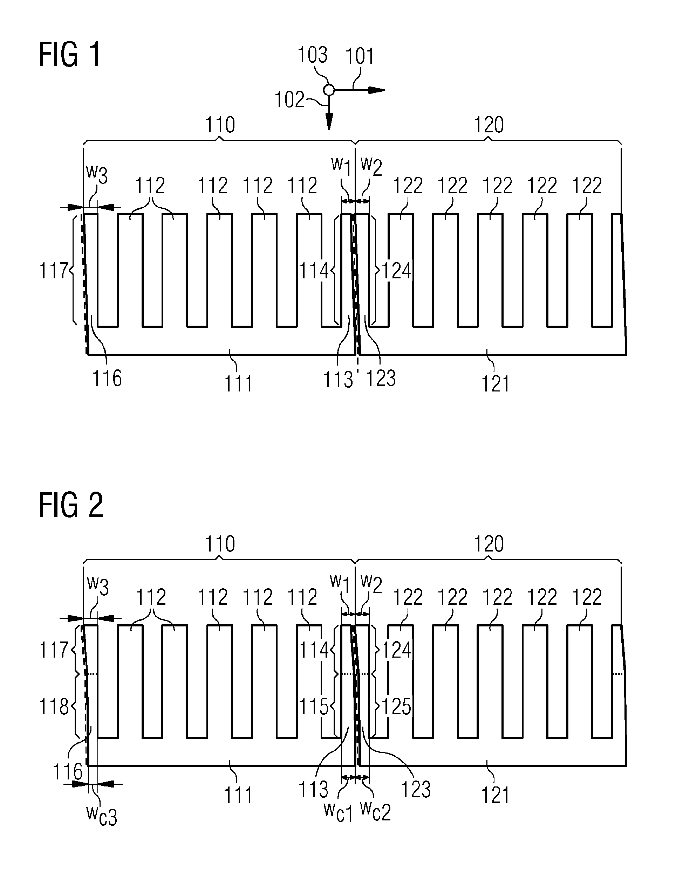

Fig. 1 shows a schematic view of a stator 100 with two stator segments 110, 120 according to an exemplary embodiment of the present invention. The stator 100 is usable in an electrical machine, in particular a generator for a wind turbine. The stator 100 comprises a first stator segment 110 comprising a first basic body 111 and at least one first stator tooth 112 extending from the first basic body 111. The first stator segment 110 comprises a first edge tooth 113 extending from the first basic body 111, wherein the first edge tooth 113 forms a circumferential edge section of the first stator segment 110. The stator 100 further comprises a second stator segment 120 comprising a second basic body 121 and at least one second stator tooth 122 extending from the second basic body 121, wherein the second stator segment 120 comprises a second edge tooth 123 extending from the second basic body 121. The second edge tooth 123 forms a circumferential edge section of the second stator segment 120, wherein the first stator segment 110 is attached to the second stator segment 120 such that the first edge tooth 113 is coupled to the second edge tooth 123 for forming a common edge tooth. A first top width w1 at a first top section 114 of the first edge tooth 113 differs from a second top width w2 at a second top section 124 of the second edge tooth 123.

The electrical machine, such as an electro motor or a generator, in particular for a wind turbine, comprises the above described stator 100 and a rotor. The stator 100 generally comprises a plurality of windings such that the magnetic interaction with the rotor is provided. The rotor is mounted to a rotating shaft and rotates with respect the stator 100.

The stator 100 is made of a plurality of stator segments which are divided along a circumferential direction. The stator 100 shown in Fig. 1 to Fig. 4 is shown in an unrolled view within a plane of protection. In this context, the circumferential direction 101 denotes the direction around the centre axis and the rotating shaft of the rotor, respectively. An axial direction 103 describes a direction parallel to the rotating shaft of the rotor. A radial direction 102 describes a direction which is perpendicular to the axial 103 direction and which runs through the rotating shaft and the centre axis, respectively. The circumferential direction 101 is perpendicular to the axial direction 103 and the radial direction 102.

Each of the stator segments 110, 120 comprises a respective basic body 111, 121 which extends along the circumferential direction 101. The respective basic body 111, 121 forms a so-called stator yoke. From each basic body 111, 121, a plurality of respective stator teeth 112, 122 extends specifically along the radial direction 102. The stator teeth 112, 122 are arranged generally one after another along the circumferential direction 101. Between each adjacent pair of stator teeth 112, 122, a respective slot is formed. Inside the slot that stator windings are arranged.

At a circumferential end face of the respective stator segments 110, 120 a respective edge tooth 113, 123 is formed. The respective edge tooth 113, 123 comprises a smaller width than the respective first and second stator teeth 112, 122 of the respective first and second stator segments 110, 120. The edge teeth 113, 123 are formed such that, in an assembled state of the first and second stator segments 110, 120, the first edge tooth 113 is coupled to and in contact with the second edge tooth 123 such that the first edge tooth 113 and the second edge tooth 123 form together a common edge tooth. The common edge tooth comprises preferably the same geometric extension than the first and second stator teeth 112, 122 of the respective first and second stator segments 110, 120.

The first edge tooth 113 and the second edge tooth 123 comprise top sections 114, 124 with different widths w1, w2. The width w of a section of a respective edge tooth 113, 123 is taken along the circumferential direction 101.

As shown in Fig. 1, the first edge tooth 113 comprises the first top section 114. The first top section 114 denotes in the exemplary embodiment in Fig. 1 the complete length of the first edge tooth 113. The first top section 114 comprises the top end (free end) of the first edge tooth 113. Accordingly, the second edge tooth 123 comprises the second top section 124. The second top section 124 denotes in the exemplary embodiment in Fig. 1 the complete length of the second edge tooth 123. The second top section 124 comprises the top end (free end) of the second edge tooth 123. In other words, the top sections 114, 124 define the sections between respective basic body 111, 121 and respective top (free) end.

The first top width w1 at the first top section 114 of the first edge tooth 113 differs, i.e. is larger or smaller, from the second top width w2 at the second top section 124 of the second edge tooth 123. Hence, asymmetrical first and second edge teeth 113, 123 at the adjacent circumferential ends of the respective stator segments 110, 120 are provided. By varying the first top width w1 and second top width w2, the (magnetic) force acting on the respective first and second edge teeth 113, 123 is adjusted, such that the magnetic force acting on the first edge tooth 113 is similar or the same as the force acting on the second edge tooth 123.

Furthermore, the stator 100 may comprise a third stator segment (not shown) comprising a third basic body and at least one third stator tooth extending from the third basic body, wherein the third stator segment comprises a third edge tooth extending from the third basic body. The third edge tooth forms a circumferential edge section of the third stator segment.

The first stator segment 110 comprises a further first edge tooth 116 extending from the basic body 111, wherein the further first edge tooth 116 forms a further circumferential edge section of the first stator segment 110. The first stator segment 100 is attached to the third stator segment such that the further first edge tooth 116 is coupled to the third edge tooth for forming a third common edge tooth, wherein a third top width at a third top section of the third edge tooth differs from a further first top width w3 at a further first top section 124 of the further first edge tooth 116.

By the above described exemplary embodiment it is outlined, that circumferential end faces of the first stator segment 110, the second stator segment 120 is attachable at a circumferential end face of the first stator segment 110 the third stator segment may be attached on the other side circumferential end face of the first stator element 110. Along the circumferential direction 101, a plurality of stator segments as defined above maybe arranged one after another until the stator has a closed profile and a closed ring shaped profile, respectively. Between two adjacent stator segments 110, 120 the respective edge teeth 113, 123 of the respective adjacent stator segments 110, 120 are formed and are coupled with each other.

Fig. 2 shows a schematic view of the stator 100 with two stator segments 110, 120, wherein two adjacent edge teeth 113, 123 comprise respective centres sections 115, 125 and tapering top sections 114, 124.

The first edge tooth 113 comprises a first centre section 115 between the basic body 111 and the first top section 114. The second edge tooth 120 comprises a second centre section 125 between the second basic body 121 and the second top section 124.

The first centre section 115 comprises a different width wc1 with respect to the first top section 114, for example. Accordingly, the second centre section 125 comprises a different width wc2 with respect to the second top section123.

As shown in Fig. 2, the first centre width wc1 of the first centre section 115 equals to the second centre width wc2 of the second centre section 125. Hence, the respective centre widths wc1, wc2 of the adjacent first edge tooth 113 and the second edge tooth 123 are symmetrical and have similar geometric extension, respectively.

The first top section 114 of the first edge tooth 113 comprises a tapered profile tapering in the direction from the first basic body 111 to a top end of the first top section 114, wherein the second top section 124 of the second edge tooth 123 comprises a tapered profile tapering in the direction from a top end of the second top section 124 to the second centre section 125.The tapered profile of the first top section 114 corresponds to the tapered profile of the second top section 124, such that the first top section 114 and the second top section 124 form together a preferably rectangular profile and hence the common edge tooth.

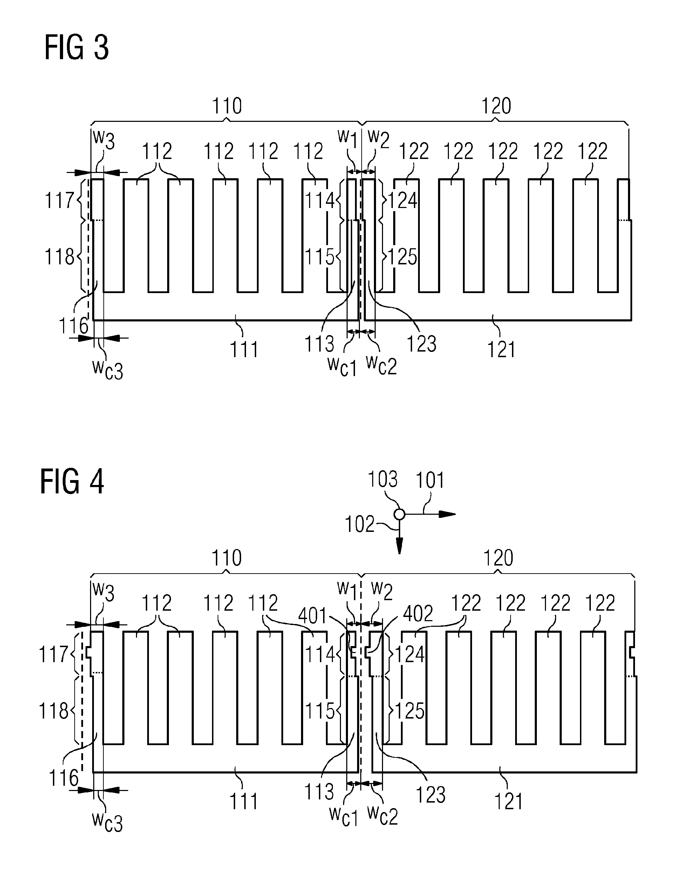

Fig. 3 shows a schematic view of the stator 100 with two stator segments 110, 120, wherein two adjacent edge teeth 113, 123 comprise step-like profiles. The first edge tooth 113 comprises a step-like transition between the first centre width wc1 of the first centre section 115 and the first top width w1 at the first top section 113 and/or second edge tooth 123 comprises a step-like transition between the second centre width wc2 of the second centre section 125 and the second top width w2 at the second top section 125.

Fig. 4 shows the stator 100 with two stator segments 110, 120, wherein two adjacent edge teeth 113, 123 comprise respective grooves 401 and protrusions 402. The first top section 114 of the first edge tooth 113 comprises a groove 401, wherein the second top section 124 of the second edge tooth 123 comprises a protrusion 402, and vice versa. The protrusion 402 and the groove 401 are formed in such a way that the protrusion 402 is engaged within the groove 401 if the first stator segment 110 is attached to the second stator segment 120.

Hence, the intersecting line between the first edge tooth 113 and the second edge tooth 123 in the respective top sections 114, 124 is not a straight line but is a step-like line, wherein the protrusion 401 is engaged in the groove 402. Hence, a more homogeneous magnetic field and a kind of form fit and dovetail connection is formed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator (100) for an electrical machine, in particular a generator for a wind turbine, the stator (100) comprising
a first stator segment (110) comprising a first basic body (111) and at least one first stator tooth (112) extending from the first basic body (111),
wherein the first stator segment (110) comprises a first edge tooth (113) extending from the first basic body (111), wherein the first edge tooth (113) forms a circumferential edge section of the first stator segment (110), and
a second stator segment (120) comprising a second basic body (121) and at least one second stator tooth (122) extending from the second basic body (121),
wherein the second stator segment (120) comprises a second edge tooth (123) extending from the second basic body (121), wherein the second edge tooth (123) forms a circumferential edge section of the second stator segment (120),
wherein the first stator segment (110) is attached to the second stator segment (120) such that the first edge tooth (113) is coupled to the second edge tooth (123) for forming a common edge tooth,
wherein a first top width (w1) at a first top section (114) of the first edge tooth (113) differs from a second top width (w2) at a second top section (124) of the second edge tooth (123).

2. Stator (100) according to claim 1,
wherein the first edge tooth (113) comprises a first centre section (115) between the first basic body (111) and the first top section (114),
wherein the second edge tooth (123) comprises a second centre section (125) between the second basic body (121) and the second top section (124).

3. Stator (100) according to claim 2,
wherein a first centre width (wc1) of the first centre section (115) equals to a second centre width (wc2) of the second centre section (125).

4. Stator (100) according to claim 2 or 3,
wherein first edge tooth (113) comprises a step-like transition between the first centre width (wc1) of the first centre section (115) and the first top width (w1) at the first top section (114), and/or
wherein second edge tooth (123) comprises a step-like transition between the second centre width (wc2) of the second centre section (125) and the second top width (w2) at the second top section (124).

5. Stator (100) according to one of the claims 1 to 4,
wherein the first top section (114) of the first edge tooth (113) comprises a tapered profile tapering in the direction to a top end of the first top section (114), and
wherein the second top section (124) of the second edge tooth (123) comprises a tapered profile tapering in the direction from a top end of the second top section (124) to the second basic body (121).

6. Stator (100) according to one of the claims 1 to 5,
wherein the first top section (114) of the first edge tooth (113) comprises a groove (401),
wherein the second top section (124) of the second edge tooth (123) comprises a protrusion (402),
wherein the protrusion (402) and the groove (401) are formed in such a way that the protrusion (402) is engaged within the groove (401) if the first stator segment (110) is attached to the second stator segment (120).

7. Stator (100) according to one of the claims 1 to 6, further comprising
a third stator segment comprising a third basic body and at least one third stator tooth extending from the third basic body,
wherein the third stator segment comprises a third edge tooth extending from the third basic body,
wherein the third edge tooth forms a circumferential edge section of the third stator segment,
wherein the first stator segment (110) comprises a further first edge tooth (116) extending from the basic body, wherein the further first edge tooth (116) forms a further circumferential edge section of the first stator segment (110),
wherein the first stator segment (110) is attached to the third stator segment such that the further first edge tooth (116) is coupled to the third edge tooth for forming a further common edge tooth,
wherein a third top width at a third top section of the third edge tooth differs from a further first top width (w3) at a further first top section (117) of the further first edge tooth (116).

8. Electrical machine, in particular a generator for a wind turbine, the electrical machine comprising
a stator according to one of the claims 1 to 7,
a rotor which is rotatably coupled to the stator.

9. Method for producing a stator (100) for an electrical machine, in particular a generator for a wind turbine, the method comprising
providing a first stator segment (110) comprising a first basic body (111) and at least one first stator tooth (112) extending from the first basic body (111),
wherein the first stator segment (110) comprises a first edge tooth (113) extending from the basic body,
wherein the first edge tooth (113) forms a circumferential edge section of the first stator segment (110), and
providing a second stator segment (120) comprising a second basic body (121) and at least one second stator tooth (122) extending from the second basic body (121),
wherein the second stator segment (120) comprises a second edge tooth (123) extending from the second basic body (121), wherein the second edge tooth (123) forms a circumferential edge section of the second stator segment (120),
attaching the first stator segment (110) to the second stator segment (120) such that the first edge tooth (113) is coupled to the second edge tooth (123) for forming a common edge tooth,
wherein a first top width (w1) at a first top section (114) of the first edge tooth (113) differs from a second top width (w2) at a second top section (124) of the second edge tooth (123).
